# FASCICULE DE BREVET EUROPEEN

(11) **EP 1 027 642 B1**
(45) Date de publication et mention de la délivrance du brevet: **29.08.2001**
(21) Numéro de dépôt: 98950180.4
(22) Date de dépôt: 23.10.1998
(51) Int. Cl.: G06F 9/308, G06F 9/315, G06F 9/38

(54) **MICROPROCESSEUR COMPRENANT DES MOYENS DE CONCATENATION DE BITS**
MIKROPROZESSOR MIT MITTELN FÜR BIT-KONKATENATION
MICROPROCESSOR COMPRISING MEANS FOR CONCATENATING BITS

(30) Priorité: 03.11.1997 FR 9713758
(43) Date de publication de la demande: 16.08.2000
(73) Titulaire: Inside technologies, 69930 Saint-Clément-les-Places (FR)
(72) Inventeur: COMMERCIAL, Sean, Bâtiment D, Dom. de Fontenaille, 13100 Aix en Provence (FR)
(74) Mandataire: Marchand, André
(86) Numéro de dépôt international: FR9802266
(87) Numéro de publication internationale: WO9923550

(56) Documents cités:
- EP-A- 0 438 126
- EP-A- 0 664 508
- US-A- 4 023 023
- JOUPPI N P: "THE NONUNIFORM DISTRIBUTION OF INSTRUCTION-LEVEL AND MACHINE PARALLELISM AND ITS EFFECT ON PERFORMANCE" IEEE TRANSACTIONS ON COMPUTERS, vol. 38, no. 12, 1 décembre 1989, pages 1645-1658, XP000096380
- LOH W L: "BEE:A SPECIAL-PURPOSE MACHINE FOR HARDWARE DESCRIPTION LANGUAGES" MICROPROCESSORS AND MICROSYSTEMS, vol. 19, no. 5, 1 juin 1995, pages 269-276, XP000589478

## Description

La présente invention concerne les microprocesseurs, et plus particulièrement la réalisation dans un microprocesseur d'une opération de concaténation d'au moins un bit d'un premier mot binaire avec des bits d'un deuxième mot binaire.

La concaténation de bits est une opération fréquemment utilisée en informatique industrielle. En particulier, les codes d'authentification émis par les cartes à microprocesseur comme les cartes bancaires sont générés par des algorithmes de cryptographie nécessitant de nombreuses opérations de concaténation de bits. Or, les microprocesseurs classiques présentent l'inconvénient de consommer plusieurs cycles d'horloges et plusieurs octets de code programme pour réaliser cette opération.

Par exemple, avec un microprocesseur du type 6805 la concaténation de bits est faite au moyen des instructions "BRSET" et "BCLR" et nécessite tout d'abord la mise à 1 des bits d'une zone mémoire destinée à contenir le résultat de l'opération. Ensuite, on teste la valeur d'un premier bit à concaténer et on met à 0 le premier bit de la zone mémoire si le bit à concaténer est égal à 0. Puis, on teste la valeur d'un deuxième bit à concaténer et on met à 0 le deuxième bit de la zone mémoire si le deuxième bit à concaténer est égal à 0, etc.. La concaténation de chaque bit dans la zone mémoire nécessite cinq octets de code programme (instructions et adressage de la mémoire compris) et le temps d'exécution est de dix cycles machine environ.

Dans un microprocesseur du type 8051, on charge tout d'abord le bit à concaténer dans un drapeau ("flag"), par exemple le drapeau CRY ("Carry"). Ensuite, on insère le bit dans le registre de travail du microprocesseur, par décalage à droite du registre au moyen de l'instruction "ROR" ou par insertion directe au moyen de l'instruction "MOV". Enfin, le contenu du registre de travail est chargé en mémoire. Ces opérations consomment également plusieurs octets de code et plusieurs cycles machine.

En définitive, les microprocesseurs de l'art antérieur exécutent avec lenteur un programme contenant un grand nombre d'opérations de concaténation et nécessitent, pour chaque opération de concaténation, l'écriture de plusieurs codes programme.

On connaît par ailleurs des microprocesseurs sophistiqués du type pipeline, c'est-à-dire à chevauchement d'instructions, dont l'avantage est de fonctionner à grande vitesse. Toutefois, ces microprocesseurs sont d'une complexité, d'un encombrement et d'un coût de revient qui les rendent impropres à être intégrés dans des cartes à puce.

En particulier, les cartes à puce sans contact alimentées par induction électromagnétique possèdent de faibles ressources en énergie électrique et doivent être équipées d'un microprocesseur qui consomme peu de courant tout en étant rapide et apte à traiter une transaction dans un temps très court, de l'ordre de quelques millisecondes.

Par ailleurs, l'article de Wai Lung Loh intitulé "BEE: a special-purpose machine for hardware description languages", paru dans la revue Microprocessors and Microsystems, vol. 19, n°5, juin 1995, décrit un émulateur de circuits hardware programmé au moyen d'un langage spécifique VHDL (Hardware Description Language). Cet article propose de faciliter la simulation d'opérations de manipulation de chaînes de bits en réalisant un circuit hardware appelé BEE ("Bitstring Emulator Engine") prenant en charge l'exécution de telles opérations. Toutefois, le circuit BEE est complexe et se prête mal à une incorporation dans un microprocesseur destiné aux cartes à puce.

Le brevet EP-A-0 664 508 décrit un processeur particulièrement adapté au transfer de bits.

Enfin, le brevet US 4 023 023 décrit un circuit hardware permettant de réaliser diverses opérations de décalage et de concaténation de bits à partir de deux mots binaires fournis en entrée.

Un objectif général de la présente invention est de prévoir un microprocesseur qui incorpore un circuit hardware de concaténation de bits tout en étant de conception simple, de faible encombrement et de faible consommation, et qui offre une grande rapidité de traitement des instructions d'un programme, notamment d'une instruction de concaténation.

Cet objectif est atteint par la prévision d'un microprocesseur pipeline comprenant des moyens de décodage d'une instruction de concaténation d'au moins un bit d'un premier mot binaire avec au moins un bit d'un deuxième mot binaire ; une banque de registres ; des moyens de traitement de l'instruction de concaténation ; un premier étage pipeline comprenant les moyens de décodage de l'instruction de concaténation ; un deuxième étage pipeline, contigu au premier étage, comprenant un premier secteur comprenant des moyens de concaténation, dans lequel la banque de registres est agencée en lecture, et un deuxième secteur dans lequel la banque de registres est agencée en écriture, le premier secteur étant actif à chaque demi-cycle d'horloge du microprocesseur et le deuxième secteur actif à chaque demi-cycle d'horloge suivant, les moyens de traitement de l'instruction de concaténation étant agencés pour lire les premier et deuxième mots binaires dans la banque de registres et exécuter l'instruction de concaténation au cours d'un premier demi-cycle d'horloge, et enregistrer le résultat de la concaténation dans la banque de registres au cours du demi-cycle d'horloge suivant.

Avantageusement, les moyens de concaténation comprennent des moyens de présentation en parallèle, sur le chemin de données du microprocesseur, des deux mots binaires lus dans la banque de registres, des moyens de sélection d'au moins un bit à concaténer du premier mot binaire, et des moyens pour décaler des bits du deuxième mot binaire sur le chemin de données et insérer dans le deuxième mot binaire au moins le bit sélectionné du premier mot binaire.

Avantageusement, les moyens pour décaler des bits comprennent un circuit à commutation matérielle de fils agencé pour, sur réception d'un signal de décalage, décaler le rang des fils du chemin de données et connecter à au moins un fil du chemin de données la sortie des moyens de sélection du bit à concaténer.

Selon un mode de réalisation, les moyens de sélection d'au moins un bit comprennent un circuit multiplexeur agencé sur le chemin de données pour recevoir en entrée le premier mot binaire.

Selon un mode de réalisation, le deuxième mot binaire est lu dans la banque de registres à l'adresse d'enregistrement du résultat de la concaténation.

Selon un mode de réalisation, le microprocesseur comprend des moyens de décodage d'une instruction compacte de concaténation comportant une adresse compacte d'enregistrement du résultat de la concaténation.

Selon un mode de réalisation, le microprocesseur comprend des moyens de décodage d'une instruction de concaténation dont le code comporte une adresse compacte prédéterminée d'enregistrement du résultat de la concaténation.

Selon un mode de réalisation, les moyens de décodage de l'instruction de concaténation sont agencés pour générer une adresse fixe et prédéterminée d'enregistrement du résultat de la concaténation.

Ces caractéristiques ainsi que d'autres de la présente invention seront exposées plus en détail dans la description suivante, faite à titre non limitatif, d'un exemple de réalisation d'un microprocesseur selon l'invention, en relation avec les figures jointes parmi lesquelles :
- la figure 1 représente sous forme de blocs les principaux éléments d'un microprocesseur selon l'invention,
- la figure 2 représente un circuit à décalage selon l'invention, représenté schématiquement en figure 1, et
- la figure 3 représente un élément interrupteur du circuit à décalage de la figure 2.

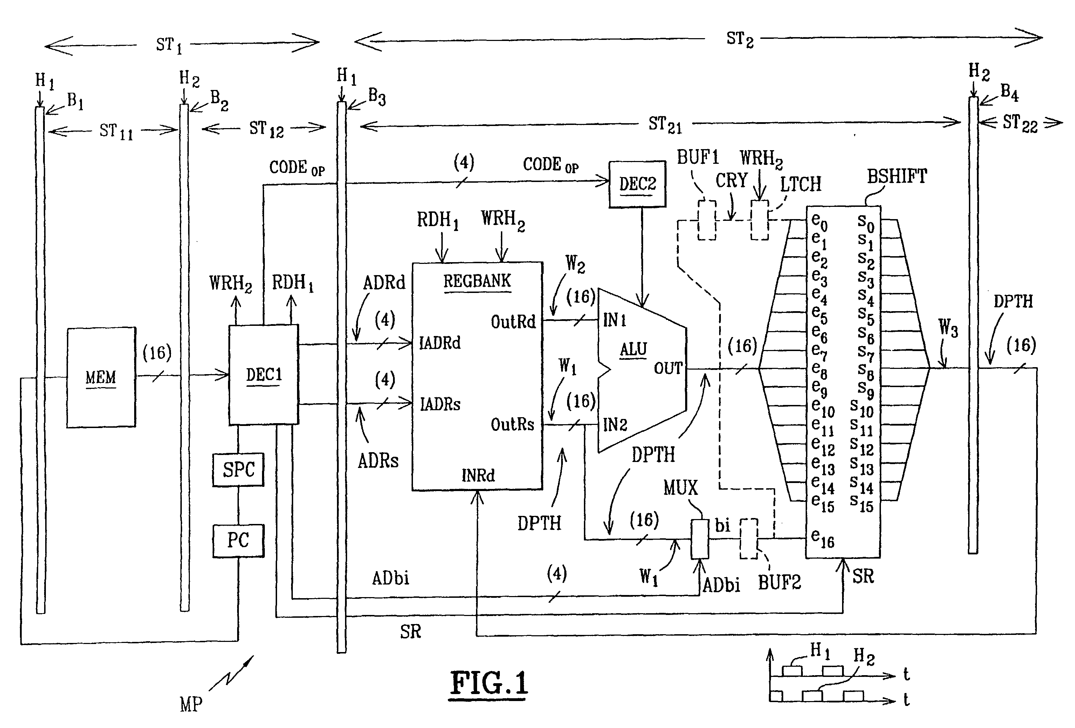

La figure 1 représente un microprocesseur MP selon l'invention, fonctionnant ici sous 16 bits et du type pipeline, c'est-à-dire à chevauchement d'instructions. Le microprocesseur est organisé pour exécuter des instructions compactes se présentant sous le format suivant :

| | | | |
|---|---|---|---|
| CODE_{OP} | ADRd | ADRs | - |

Ces instructions, codées ici sur 16 bits, comprennent un code CODE_{OP} de l'opération à exécuter, codé sur 4 bits, l'adresse ADRd d'un registre Rd de destination du résultat, sur 4 bits, et l'adresse ADRs d'un registre source Rs, sur 4 bits (ici, le dernier champ de l'instruction n'est pas utilisé). L'opération est par exemple l'addition ADD (additionner Rs et Rd et stocker le résultat dans Rd), la soustraction SUB (soustraire Rs à Rd et stocker le résultat dans Rd), le OU logique (stocker dans Rd le résultat de Rs OU Rd), le ET logique, etc..

Selon l'invention, le microprocesseur est également organisé pour exécuter une instruction compacte de concaténation BMV, selon le format suivant :

| | | | |
|---|---|---|---|
| CODE_{BMV} | ADRd | ADRs | ADbi |

Cette instruction comprend le code CODE_{BMV} de l'opération de concaténation, sur 4 bits, l'adresse ADRd du registre Rd de destination du résultat de la concaténation, sur 4 bits, l'adresse ADRs d'un registre source Rs, sur 4 bits, et l'adresse (ou rang) ADb₁ d'un bit b₁ du registre source Rs.

Cette instruction signifie ici, de façon non limitative :
1) lire un mot binaire W1 dans le registre Rs
2) lire un mot binaire W2 dans le registre Rd,
3) concaténer ("accoler") le bit b₁ du mot binaire W1 avec le bit de plus fort poids du mot binaire W2,
4) enregistrer dans le registre Rd le mot W3 comprenant le résultat de la concaténation.

Comme on le verra plus loin, ces diverses étapes sont avantageusement réalisées en un seul cycle d'horloge.

On décrira tout d'abord la structure générale du microprocesseur selon l'invention, qui comprend une mémoire programme MEM, une banque de registres REGBANK, une unité de calcul arithmétique et logique ALU, un compteur ordinal PC, un circuit SPC d'incrémentation du compteur ordinal PC et un décodeur DEC1 d'instructions. Le microprocesseur comprend également des moyens de concaténation prenant la forme d'un circuit à décalage BSHIFT et un circuit MUX de sélection, en fonction de l'adresse ADbᵢ, du bit bᵢ à concaténer.

Le décodeur DEC1, l'unité ALU et la banque REGBANK, représentés sous forme de blocs, sont des circuits ou des ensembles de circuits bien connus de l'homme de l'art et leur structure interne ne sera pas décrite. Le décodeur DEC1 est connecté à la sortie de la mémoire MEM pour recevoir les instructions d'un programme à exécuter. L'unité ALU comporte ici deux entrées IN1, IN2, une sortie OUT, et est pilotée par un décodeur DEC2. La banque de registres REGBANK contient divers registres de travail, par exemple seize registres R0 à R15 (non représentés). La banque REGBANK comporte une entrée IADRs pour l'adresse ADRs du registre source Rs, une entrée IADRd pour l'adresse du registre de destination Rd, une sortie OUTRs de lecture du registre source Rs, une sortie OUTRd de lecture du registre de destination Rd, et une entrée INRd pour l'écriture d'un résultat dans le registre de destination Rd. La sortie OUTRd de la banque REGBANK est connectée à l'entrée IN1 de l'unité ALU. La sortie OUTRs est connectée à l'entrée IN2 de l'unité ALU et à l'entrée du circuit MUX.

Le circuit BSHIFT comprend seize entrées de bits e₀ à e₁₅ connectées à la sortie OUT de l'unité ALU, une entrée auxiliaire e₁₆ connectée à la sortie du circuit MUX, et seize sorties de bits s₀ à s₁₅ formant la terminaison du chemin de données DPTH du microprocesseur, ces sorties étant connectées à l'entrée INRd de la banque REGBANK.

Ainsi, le chemin de données DPTH du microprocesseur comprend tout d'abord deux voies de seize fils à la sortie de la banque REGBANK, puis une voie de seize fils et un fil auxiliaire à l'entrée du circuit BSHIFT, et enfin une voie de seize fils de la sortie du circuit BSHIFT jusqu'à l'entrée de la banque REGBANK.

D'autres connexions de la terminaison du chemin de données DPTH sont bien entendu envisageables, par exemple une connexion à la mémoire MEM ou à une autre mémoire de stockage de données.

Le circuit BSHIFT est piloté par un signal SR. Quand ce signal est à 0, le circuit BSHIFT est transparent et les sorties s₁₅ à s₀ recopient les entrées e₁₅ à e₀. Quand le signal BSHIFT est à 1, le circuit décale ses sorties relativement à ses entrées. Les sorties s₁₄ à s₀ recopient les entrées e₁₅ à e₁, respectivement, et la sortie s₁₅ recopie l'entrée auxiliaire e₁₆. Dans ce cas, l'entrée e₀ est déconnectée du chemin de données.

Selon l'invention, le microprocesseur est par ailleurs organisé en deux étages pipeline ST1, ST2 contigus, délimités par des registres à verrouillage B1, B3 (ou "latch"). Ces registres B1, B3 sont déverrouillés par le front montant d'un signal d'horloge H1. La mémoire MEM et le décodeur DEC1 sont agencés dans le premier étage ST1. La banque REGBANK, l'unité ALU, le multiplexeur MUX et le circuit BSHIFT sont agencés dans le deuxième étage ST2.

Les deux étages ST1, ST2 sont divisés chacun en deux secteurs ST11/ST12, respectivement ST21/ST22. Les secteurs ST11/ST12 sont délimités par un registre B2 agencé entre la sortie de la mémoire MEM et le décodeur DEC1. Les secteurs ST21/ST22 sont délimités par un registre B4 agencé entre les sorties s₀ à s₁₅ du circuit BSHIFT et l'entrée INRd de la banque REGBANK. Le registre B2 est un registre à verrouillage déverrouillé par le front montant d'un signal H2 déphasé de 180° relativement au signal H1. Le registre B4 est de préférence un tampon trois états ("buffer tristate") transparent quand le signal H2 est à 1, et dans l'état haute impédance quand le signal H2 est à 0. Ainsi, le signal d'horloge H1 synchronise le transfert des données de l'étage ST1 vers l'étage ST2, et le signal H2 synchronise le transfert des données du premier secteur ST11, ST21 vers le deuxième secteur ST12, ST22 de chaque étage pipeline. Pour fixer les idées, les signaux d'horloge H1 et de transfert H2 sont représentés au bas de la figure 1.

La banque REGBANK est commandée en lecture par un signal RDH1 et en écriture par un signal WRH2. Ces signaux sont envoyés par le décodeur DEC1. Le signal de lecture RDH1 est émis quand le signal d'horloge H1 passe à 1 et le signal d'écriture WRH2 est émis quand le signal H2 passe à 1. La banque REGBANK appartient ainsi, en lecture, au premier secteur ST21 de l'étage ST2 et, en écriture, au deuxième secteur ST22 de l'étage ST2.

Enfin, la mémoire MEM délivre l'instruction contenue à l'adresse fournie par le compteur ordinal PC sur réception du signal de lecture RDH1.

Pour illustrer le fonctionnement du microprocesseur selon l'invention, on se référera par exemple à la séquence d'instructions suivante :
(1) **SUB R1,R2** (soustraire R2 à R1 et stocker le résultat dans R1)
(2) **BMV R0,R1,12** (concaténer dans R0 le bit de rang 12 contenu dans R1).

Ces instructions sont délivrées par la mémoire MEM sous la forme suivante :

| | | | |
|---|---|---|---|
| CODE_{SUB} | ADR1 | ADR2 | - |

| | | | |
|---|---|---|---|
| CODE_{BMV} | ADR0 | ADR1 | 12 |

La séquence est exécutée par le microprocesseur selon des étapes 1.1 à 1.4 et 2.1 à 2.4 décrites ci-après. Les diverses opérations réalisées au cours de chacune de ces étapes se déroulent de façon asynchrone selon le flot des données à travers les éléments du microprocesseur, et sont considérées comme achevées à la fin de chaque étape.
**1.1 -** H1 = 1, H2 = 0, registre B1 déverrouillé, secteur ST11 actif :
   - le décodeur DEC1 émet le signal de lecture RDH1 et l'instruction **SUB R1, R2** est lue dans la mémoire MEM.
**1.2 -** H1 = 0, H2 = 1, registre B2 déverrouillé, secteur ST12 actif :
   - le décodeur DEC1 décode l'instruction **SUB R1, R2,** met le signal SR à 0, envoie les adresses ADR1 et ADR2 vers la banque REGBANK et envoie le code opération CODE_{SUB} de la soustraction vers l'unité ALU,
   - le circuit SPC incrémente le compteur ordinal PC.
**1.3 -** H1 = 1, H2 = 0, registre B3 déverrouillé, secteur ST21 actif :
   - la banque REGBANK reçoit les adresses ADR1, ADR2, le décodeur DEC2 reçoit le code CODE_{SUB} et le décodeur DEC1 émet le signal de lecture RDH1,
   - les registres R1 et R2 sont lus et leur contenu appliqué sur les entrées IN1, IN2 de l'unité ALU,
   - l'unité ALU délivre le résultat de la soustraction [R1-R2].
**1.4 -** H1 = 0, H2 = 1, registre B4 transparent, secteur ST22 actif :
   - le décodeur DEC1 émet le signal d'écriture WRH2,
   - le circuit BSHIFT étant transparent (SR=0), le résultat de la soustraction [R1-R2] se retrouve sur l'entrée INRd de la banque REGBANK,
   - le résultat de la soustraction [R1-R2] est enregistré dans le registre R1.
**2.1 -** H1 - 1, H2 = 0, registre B1 déverrouillé, secteur ST11 actif :
   - le décodeur DEC1 émet le signal de lecture RDH1 et l'instruction **BMV R0,R1,12** est lue dans la mémoire MEM.
**2.2 -** H1 = 0, H2 = 1, registre B2 déverrouillé, secteur ST12 actif :
   - le décodeur DEC1 décode l'instruction **BMV R0,R1,12,** met le signal SR à 1, envoie les adresses ADR1 et ADR2 vers la banque REGBANK, envoie l'adresse ADbᵢ = 12 vers le multiplexeur MUX, et envoie le code opération CODE_{BMV} de la concaténation vers l'unité ALU,
   - le circuit SPC incrémente le compteur ordinal PC.
**2.3** - H1 = 1, H2 = 0, registre B3 déverrouillé, secteur ST21 actif :
   - la banque REGBANK reçoit les adresses ADR1, ADR2, le décodeur DEC2 reçoit le code CODE_{BMV}, le circuit MUX reçoit l'adresse ADBᵢ (ici 12), le circuit BSHIFT reçoit le signal SR à 1 et le décodeur DEC1 émet le signal de lecture RDH1,
   - le mot binaire W1 contenu dans le registre R1 est appliqué sur l'entrée du multiplexeur MUX et le mot binaire W2 contenu dans le registre R0 est appliqué sur l'entrée IN1 de l'unité ALU,
   - selon l'invention, l'unité ALU recopie sur sa sortie OUT le mot W2 présent sur son entrée IN1,
   - le multiplexeur MUX sélectionne le bit b₁₂ qui se retrouve sur l'entrée auxiliaire e₁₆ du circuit BSHIFT,
   - le circuit BSHIFT connecte les sorties s₁₄ à s₀ aux entrées e₁₅ à e₁, connecte la sortie s₁₅ à l'entrée auxiliaire e₁₆, et délivre un mot binaire W3 de la forme suivante :
      W3 = b₁₂ c₁₅ c₁₄ c₁₃ c₁₂ c₁₁ c₁₀ c₉ c₈ c₇ c₆ c₅ c₄ c₃ c₂ c₁,
      dans lequel le bit de plus fort poids est le bit b₁₂ sélectionné dans le mot W1. Les autres bits du mot W3 sont des bits c₁₅ à c₁ du mot W2, le bit de plus faible poids c₀ ayant été supprimé par le décalage.
**2.4 -** H1 = 0, H2 = 1, tampon B4 transparent, secteur ST22 actif :
   - le mot W3 est appliqué sur l'entrée INRd de la banque REGBANK,
   - le décodeur DEC1 émet le signal d'écriture WRH2 et le mot W3 est enregistré dans le registre R0 de la banque REGBANK.

Dans le microprocesseur pipeline selon l'invention, les étapes qui viennent d'être décrites se chevauchent comme indiqué dans le tableau 1 ci-après.

**Tableau 1**

| Cycle pipeline | | Cycle pipeline | | Cycle pipeline | |
|---|---|---|---|---|---|
| 1/2 cycle | 1/2 cycle | 1/2 cycle | 1/2 cycle | ½ cycle | 1/2 cycle |
| H1=1 | H2=1 | H1=1 | H2=1 | H1=1 | H2=1 |
| étape 1.1 | étape 1.2 | étape 1.3 | étape 1.4 | | |
| | | étape 2.1 | étape 2.2 | étape 2.3 | étape 2.4 |
| | | | | étape 3.1 | étape 3.2 |

Dans ce tableau, les étapes 3.1 et 3.2 sont des étapes de lecture et de décodage d'une nouvelle instruction (quelconque) suivant l'instruction BMV.

On voit que les étapes 2.3 et 2.4 sont réalisées en un seul cycle d'horloge. Par ailleurs, en raison du fonctionnement pipeline du microprocesseur, les étapes de lecture 2.1 et décodage 2.2 chevauchent les étapes 1.3 et 1.4 de l'instruction précédente et ne consomment pas le temps d'horloge.

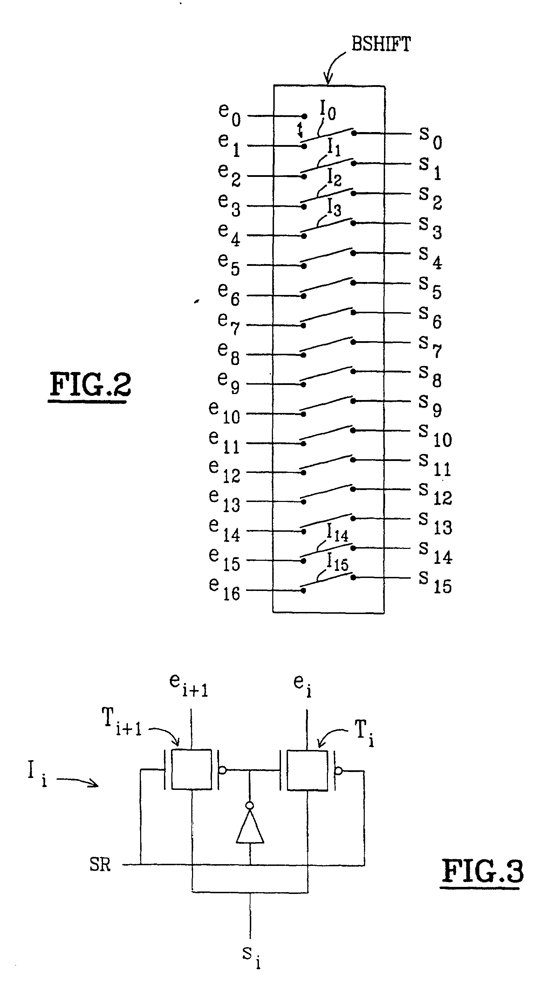

La figure 2 représente un mode de réalisation avantageux du circuit BSHIFT, au moyen de seize interrupteurs I0 à I15 commandés par le signal SR. Chaque interrupteur Iᵢ est agencé pour connecter une sortie Sᵢ de rang i à une entrée eᵢ de même rang ou à une entrée eᵢ₊₁ de rang supérieur, selon la valeur du signal SR. Comme illustré par la figure 3, les interrupteurs Iᵢ peuvent être réalisés au moyen de deux interrupteurs CMOS Tᵢ et Tᵢ₊₁ agencés entre la sortie sᵢ et les entrées eᵢ et eᵢ₊₁. Le signal SR est appliqué au transistor NMOS de l'interrupteur Tᵢ₊₁ et au transistor PMOS de l'interrupteur Tᵢ. Un signal inverse /SR, délivré par une porte inverseuse, est appliqué au transistor PMOS de l'interrupteur Tᵢ₊₁ et au transistor NMOS de l'interrupteur Tᵢ.

Ce circuit BSHIFT à décalage de bits par commutation matérielle de fils présente l'avantage, par rapport à un registre à décalage classique, de pouvoir recevoir le signal de décalage SR au commencement du cycle d'horloge H1 avant que les données ne soient stabilisées sur les entrées e₁₆ à e₀. La prévision d'un registre à décalage classique reste toutefois envisageable, à la condition de prévoir un circuit à retard pour l'application du signal SR.

Pour fixer les idées sur les applications pratiques de l'invention, le tableau 2 ci-après décrit la séquence de concaténation suivante :
"Concaténer dans R0 = 1010 1010 1010 1010
le bit 12 de R1 = 000**1** 0010 0011 0100,
puis le bit 0 de R2 = 0010 0011 0100 010**1**,
puis le bit 14 de R3 = 0**0**11 0100 0101 0110,
puis le bit 2 de R1 = 0001 0010 0011 0**1**00".

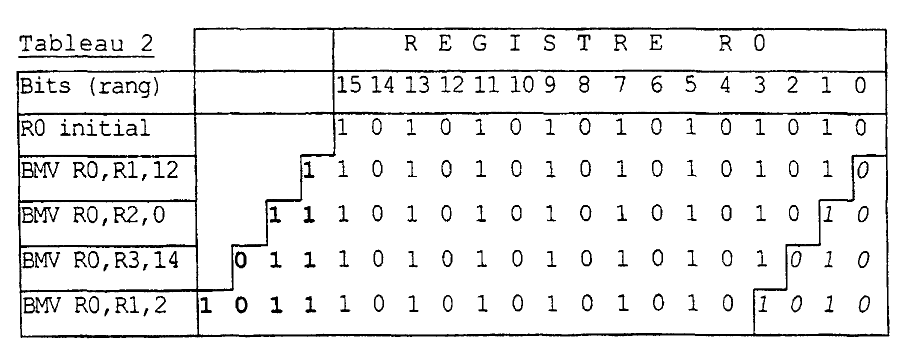

Les bits concaténés dans le registre R0 sont en caractères gras. Les bits en italiques sont les bits de poids faible perdus par décalage à droite. Au total, la concaténation des quatre bits ne nécessite que quatre cycles d'horloge pipeline et un programme de quatre instructions seulement.

La séquence décrite par le tableau 2 montre qu'une opération répétitive de concaténation fait intervenir le même registre de destination Rd (ici R0). Après seize concaténations, ce registre est "plein". Si l'on souhaite produire des chaînes de bits concaténés de grande longueur, par exemple de 16, 32, 64 bits ou plus, on peut changer de registre de destination Rd après chaque cycle de 16 concaténations. Une autre solution consiste à conserver le même registre Rd en sauvegardant son contenu après chaque cycle de 16 concaténations. Ainsi, une variante de l'invention permettant de simplifier encore plus le format de l'instruction BMV consiste à imposer l'adresse du registre de destination Rd. Dans ce cas, l'instruction BMV est codée de la façon suivante :

| | | |
|---|---|---|
| CODE_{BMV} | ADRs | ADbi |

Dans ce cas, l'adresse ADRd du registre Rd, par exemple le registre R0, est générée automatiquement par le décodeur DEC1 sur réception du code CODE_{BMV}. L'adresse ADRd peut aussi être comprise dans le code CODE_{BMV} qui peut alors être codé sur 8 bits au lieu de 4.

Il apparaîtra clairement à l'homme de l'art que la présente invention est susceptible de nombreuses autres variantes de réalisation et perfectionnements.

En particulier, et comme représenté en traits pointillés sur la figure 1, le bit de poids faible présent sur l'entrée e₀ du circuit BSHIFT peut être conservé au moyen d'un registre LTCH en tant que drapeau CRY ("Carry") du microprocesseur. La sortie du registre LTCH contient le drapeau CRY et est connectée à l'entrée e₁₆ du circuit BSHIFT par l'intermédiaire d'un tampon BUF1, pour l'injection éventuelle du drapeau CRY dans le chemin de données. Un deuxième tampon BUF2 est interposé entre la sortie du circuit MUX et l'entrée e16, pour éviter les collisions entre le bit sélectionné bᵢ et le drapeau CRY. Le décodeur DEC1 pilote les tampons BUF1 et BUF2 en fonction du type d'instruction reçue. Egalement, le décodeur DEC1 envoie le signal d'écriture WRH2 au registre LTCH pour la mise à jour du drapeau CRY au moment de l'activation du secteur ST22, quand un décalage à droite a été effectué dans le secteur ST₂₁ au cours du demi-cycle d'horloge précédent.

D'autre part, le circuit BSHIFT peut être utilisé pour réaliser des opérations arithmétiques comme la division ou la multiplication, qui nécessitent de façon classique des décalages de bits. Sinon, le circuit BSHIFT peut être disposé en d'autres points du chemin de données, par exemple entre la sortie OUTRd de la banque REGBANK et l'entrée IN1 de l'unité ALU.

Egalement, il est bien entendu que la concaténation du bit bᵢ peut aussi être faite par insertion du bit bᵢ en tant que poids faible sur l'entrée e₀ du circuit BSHIFT et rotation à gauche des bits du mot binaire W2.

Par ailleurs, l'opération de concaténation du bit bᵢ peut être étendue de façon simple à la concaténation simultanée de plusieurs bits du registre source Rs, sélectionnés simultanément par le circuit MUX. Par exemple, la prévision de plusieurs circuits BSHIFT en cascade peut permettre de choisir entre la concaténation d'un seul bit, de deux bits à la fois, de trois bits, etc.. Le choix du nombre de bits à concaténer peut être codé dans le champ CODE_{BMV} de l'instruction.

De façon générale, on a décrit dans ce qui précède diverses caractéristiques d'un microprocesseur permettant d'accélérer et de simplifier les programmes informatiques comportant de nombreuses opérations de concaténation. Ces caractéristiques peuvent être résumées, de façon non exhaustive et non limitative, comme suit :
i) la prévision d'une instruction de concaténation et de moyens de décodage et de traitement de cette instruction, ce qui permet de simplifier l'écriture des programmes et d'accélérer leur exécution,
ii) la prévision d'une telle instruction sous une forme compacte incorporant au moins une adresse de lecture d'un bit à concaténer et le rang de ce bit, ce qui permet d'accélérer la lecture et le traitement de l'instruction,
iii) la lecture des mots W1, W2 et l'enregistrement du résultat W3 dans la banque de registre REGBANK du microprocesseur, ce qui permet de réduire la taille des champs adresses de l'instruction,
iv) l'exécution de l'opération de concaténation "en ligne" sur le chemin de données du microprocesseur, en un cycle d'horloge, avec présentation en parallèle des mots W1 et W2,
v) la réalisation des trois étapes de lecture des mots W1, W2, d'exécution de la concaténation et d'enregistrement du résultat W3 au cours du même cycle d'horloge, grâce à la division du deuxième étage pipeline en deux secteurs complémentaires,
vi) la prévision d'un circuit BSHIFT à décalage par commutation matérielle de fils, pouvant être commandé de façon asynchrone en début de cycle d'horloge sans attendre que les données soient stabilisées.

En ce qui concerne la caractéristique iii), il convient de noter que les adresses compactes contenues dans les instructions peuvent aussi permettre d'adresser le plan mémoire du microprocesseur. Dans ce cas, ces adresses doivent être transformées en adresses réelles du plan mémoire par un convertisseur d'adresses, appelé unité de gestion mémoire MMU ("Memory Management Unit).

D'autre part, l'homme de l'art notera que le microprocesseur selon l'invention est d'une structure particulièrement simple garantissant une faible consommation de courant. Une mesure supplémentaire pour limiter la consommation électrique consiste à disposer sur les sorties OUTRs et OUTRd de la banque REGBANK des circuits tampons pilotés par un signal H1' décalé d'une durée Δt relativement au signal H1. De cette manière, l'unité ALU n'est connectée aux sorties OUTRs, OUTRd qu'au moment ou celles-ci sont stabilisées. Le signal décalé H1' peut être obtenu simplement au moyen d'un circuit à retard, par exemple des portes inverseuses en cascade.

Enfin, il apparaîtra clairement à l'homme de l'art que le terme "demi-cycle d'horloge" ne doit pas être interprété de façon limitative. En effet, à vitesse de fonctionnement constante, il est équivalent de prévoir un signal d'horloge ayant une vitesse double et de n'activer les secteurs pipeline qu'un cycle d'horloge sur deux, en décalant d'un cycle d'horloge l'activation de chaque secteur relativement au secteur suivant. Pour chaque registre pipeline B1 à B4, la sélection d'un bit d'horloge sur deux comme signal de commande peut être faite de façon simple au moyen d'un circuit diviseur de fréquence, par exemple une bascule D dont la sortie /Q est ramenée sur l'entrée D. Les signaux de commandes des registres pipeline peuvent par ailleurs être combinés dans des portes OU Exclusif avant d'être appliqués, afin de garantir que deux secteurs complémentaires d'un même étage pipeline ne seront pas activés simultanément.

## Revendications

1. Microprocesseur (MP), comprenant des moyens de décodage (DEC1) d'une instruction (BMV) de concaténation d'au moins un bit (bᵢ) d'un premier mot binaire (W1) avec au moins un bit d'un deuxième mot binaire (W2), une banque de registres (REGBANK) et des moyens (REGBANK, MUX, BSHIFT) de traitement de l'instruction de concaténation (BMV), **caractérisé en ce qu**'il comprend :
- un premier étage pipeline (ST1) comprenant les moyens de décodage (DEC1) de l'instruction de concaténation,
- un deuxième étage pipeline (ST2), contigu au premier étage, comprenant
- un premier secteur (ST21) comprenant des moyens (OUTRd, OUTRs, MUX, BSHIFT) de concaténation, dans lequel la banque de registres (REGBANK) est agencée en lecture, et
- un deuxième secteur (ST22) dans lequel la banque de registres (REGBANK) est agencée en écriture,
le premier secteur étant actif à chaque demi-cycle d'horloge du microprocesseur et le deuxième secteur actif à chaque demi-cycle d'horloge suivant,
les moyens de traitement de l'instruction de concaténation étant agencés pour :
- lire les premier (W1) et deuxième (W2) mots binaires dans la banque de registres (REGBANK) et exécuter l'instruction de concaténation au cours d'un premier demi-cycle d'horloge, et
- enregistrer le résultat (W3) de la concaténation dans la banque de registres (REGBNANK) au cours du demi-cycle d'horloge suivant.

2. Microprocesseur selon la revendication 1, dans lequel les moyens (MUX, BSHIFT) de concaténation (BMV) comprennent :
- des moyens (OUTRd, OUTRs) de présentation en parallèle, sur le chemin de données (DPTH) du microprocesseur, des deux mots binaires (W1, W2) lus dans la banque de registres (REGBANK),
- des moyens (MUX) de sélection d'au moins un bit (bᵢ) à concaténer du premier mot binaire (W1), et
- des moyens (BSHIFT) pour décaler des bits du deuxième mot binaire (W2) sur le chemin de données (DPTH) et insérer dans le deuxième mot binaire (W2) au moins le bit sélectionné (bᵢ) du premier mot binaire (W1).

3. Microprocesseur selon la revendication 2, dans lequel lesdits moyens pour décaler des bits comprennent un circuit (BSHIFT) à commutation matérielle de fils agencé pour, sur réception d'un signal de décalage (SR), décaler le rang des fils du chemin de données (DPTH) et connecter à au moins un fil (s₁₅) du chemin de données la sortie (e₁₆) des moyens (MUX) de sélection du bit (bᵢ) à concaténer.

4. Microprocesseur selon l'une des revendications 2 et 3, dans lequel les moyens de sélection d'au moins un bit comprennent un circuit multiplexeur (MUX) agencé sur le chemin de données (DPTH) pour recevoir en entrée le premier mot binaire (W1).

5. Microprocesseur selon l'une des revendications 1 à 4, dans lequel le deuxième mot binaire (W2) est lu dans la banque de registres (REGBANK) à l'adresse (ADRd) d'enregistrement du résultat (W3) de la concaténation.

6. Microprocesseur selon l'une des revendications 1 à 5, comprenant des moyens de décodage (DEC1) d'une instruction compacte de concaténation (BMV) comportant une adresse compacte (ADRd) d'enregistrement du résultat (W3) de la concaténation.

7. Microprocesseur selon l'une des revendications 1 à 5, comprenant des moyens de décodage (DEC1) d'une instruction de concaténation (BMV) dont le code (CODE_{BMV}) comporte une adresse compacte (ADRd) prédéterminée d'enregistrement du résultat (W3) de la concaténation.

8. Microprocesseur selon l'une des revendications 1 à 5, dans lequel les moyens de décodage (DEC1) de l'instruction de concaténation (BMV) sont agencés pour générer une adresse (ADRd) fixe et prédéterminée d'enregistrement du résultat (W3) de la concaténation.

## Patentansprüche

1. Mikroprozessor (MP), umfassend Mittel zur Dekodierung (DEC1) einer Anweisung (BMV) zur Verkettung mindestens eines Bits (bᵢ) eines ersten Binärworts (W1) mit mindestens einem Bit eines zweiten Binärworts (W2), eine Registerbank (REGBANK) und Mittel (REGBANK, MUX, BSHIFT) zur Verarbeitung der Verkettungsanweisung (BMV), **dadurch gekennzeichnet**, dass er umfasst:
- eine erste Pipelinestufe (ST1), die die Mittel zur Dekodierung (DEC1) der Verkettungsanweisung umfasst,
- eine zweite Pipelinestufe (ST2), die mit der ersten Stufe zusammenhängt, umfassend
- einen ersten Sektor (ST21), der Mittel (OUTRd, OUTRs, MUX, BSHIFT) zur Verkettung umfasst, in welchem die Registerbank (REGBANK) zum Lesen eingerichtet ist, und
- einen zweiten Sektor (ST22), in welchem die Registerbank (REGBANK) zum Schreiben eingerichtet ist,
wobei der erste Sektor in jedem Halbzyklus des Taktgebers des Mikroprozessors aktiv ist, und der zweite Sektor in jedem folgenden Halbzyklus des Taktgebers aktiv ist,
wobei die Mittel zur Verarbeitung der Verkettungsanweisung eingerichtet sind, um:
- das erste (W1) und zweite (W2) Binärwort in der Registerbank (REGBANK) zu lesen und die Verkettungsanweisung durchzuführen während eines ersten Halbzyklus des Taktgebers, und
- das Ergebnis (W3) der Verkettung während des folgenden Halbzyklus des Taktgebers in der Registerbank (REGBANK) zu speichern.

2. Mikroprozessor nach Anspruch 1, bei dem die Mittel (MUX, BSHIFT) zur Verkettung (MBV) umfassen:
- Mittel (OUTRd, OUTRs) um parallel auf dem Datenpfad (DPTH) des Mikroprozessors zwei Binärworte (W1, W2) zu präsentieren, die in der Registerbank (REGBANK) gelesen wurden,
- Mittel (MUX) zur Auswahl mindestens eines zu verkettenden Bits (bᵢ) des ersten Binärworts (W1), und
- Mittel (BSHIFT) zur Verschiebung von Bits des zweiten Binärworts (W2) auf dem Datenpfad (DPTH), und um in das zweite Binärwort (W2) mindestens das ausgewählte Bit (bi) des ersten Binärworts (W1) einzufügen.

3. Mikroprozessor nach Anspruch 2, bei welchem die Mittel zum Verschieben von Bits eine Schaltung (BSHIFT) zur materiellen Leitungsvermittlung umfassen, die eingerichtet ist, um bei Empfang eines Verschiebungssignals (SR) die Reihenfolge der Leitungen des Datenpfads (DPTH) zu verschieben, und mit mindestens einer Leitung (s₁₅) des Datenpfads den Ausgang (e₁₆) der Mittel (MUX) zur Auswahl des zu verkettenden Bits (bᵢ) zu verbinden.

4. Mikroprozessor nach Anspruch 2 oder 3, bei welchem die Mittel zur Auswahl mindestens eines Bits eine Multiplexerschaltung (MUX) umfassen, die auf dem Datenpfad (DPTH) eingerichtet ist, um am Eingang das erste Binärwort (W1) zu empfangen.

5. Mikroprozessor nach einem der Ansprüche 1 bis 4, bei welchem das zweite Binärwort (W2) in der Registerbank (REGBANK) an der Adresse (ADRd) der Speicherung des Ergebnisses (W3) der Verkettung gelesen wird.

6. Mikroprozessor nach einem der Ansprüche 1 bis 5, umfassend Mittel zum Dekodieren (DEC1) einer kompakten Anweisung zur Verkettung (BMV), die eine kompakte Adresse (ADRd) zur Speicherung des Ergebnisses (W3) der Verkettung trägt.

7. Mikroprozessor nach einem der Ansprüche 1 bis 5, umfassend Mittel zur Dekodierung (DEC1) einer Verkettungsanweisung (BM7), von welcher der Code (CODE_{BMV}) eine vorbestimmte kompakte Adresse (ADRd) zur Speicherung des Ergebnisses (W3) der Verkettung trägt.

8. Mikroprozessor nach einem der Ansprüche 1 bis 5, bei dem die Mittel zur Dekodierung (DEC1) der Verkettungsanweisung (BMV) eingerichtet sind zur Erzeugung einer festen und vorbestimmten Adresse (ADRd) zur Speicherung des Ergebnisses (W3) der Verkettung.

## Claims

1. Microprocessor (MP), comprising means (DEC1) for decoding a concatenation instruction (BMV) of at least one bit (bᵢ) of a first binary word (W1) with at least one bit of a second binary word (W2), a register bank (REGBANK) and means (REGBANK, MUX, BSHIFT) for processing the concatenation instruction (BMV), **characterised in that** it comprises:
- a first pipeline stage (ST1) comprising means for decoding the concatenation instruction,
- a second pipeline stage (ST2), contiguous on the first stage, comprising
- a first sector (ST21) comprising concatenation means (OUTRd, OUTRs, MUX, BSHIFT), in which the register bank (REGBANK) is set in reading mode, and
- a second sector (ST22) in which the register bank (REGBANK) is set in writing mode,
the first sector being active at each clock half-cycle of the microprocessor and the second sector active at each following clock half-cycle,
the means for processing the concatenation instruction being arranged to:
- read the first (W1) and second (W2) binary words in the register bank (REGBANK) and execute the concatenation instruction during the first clock half-cycle, and
- register the result (W3) of the concatenation in the register bank (REGBANK) during the following clock half-cycle.

2. Microprocessor according to Claim 1, in which the means (MUX, BSHIFT) for concatenation (BMV) comprise:
- means (OUTRd, OUTRs) for presenting in parallel, in the data path (DPTH) of the microprocessor, two binary words (W1, W2) read in the register bank (REGBANK),
- means (MUX) for selecting at least one bit (b; ) from the binary word (W1) for concatenation, and
- means (BSHIFT) for shifting bits from the second binary word (W2) to the data path (DPTH) and inserting into the second binary word (W2) at least the bit (b_{I})selected from the first binary word (W1).

3. Microprocessor according to Claim 2, in which the said means for shifting the bits comprise a wired switching circuit (BSHIFT) arranged, on receipt of a shift signal (SR), to shift the row of wires of the data path (DPTH) and connect to at least one wire (S₁₅) of the data path the output (e₁₆) of the means (MUX) for selecting the bit (bᵢ) to be concatenated.

4. Microprocessor according to one of Claims 2 and 3, in which the means for selecting at least one bit comprise a multiplexing circuit (MUX) arranged in the data path (DPTH) for receiving at its input the first binary word (W1).

5. Microprocessor according to one of Claims 1 to 4, in which the second binary word (W2) is read in the register bank (REGBANK) at the address (ADRd) of registration of the result (W3) of the concatenation.

6. Microprocessor according to one of Claims 1 to 5, comprising means (DEC1) for decoding a compact concatenation instruction (BMV) comprising a compact address (ADRd) of the registration of the result (W3) of the concatenation.

7. Microprocessor according to one of Claims 1 to 5, comprising means (DEC1) for decoding a concatenation instruction (BMV) of which the code (CODE_{BMV}) comprises a predetermined compact address (ADRd) of the registration of the result (W3) of the concatenation.

8. Microprocessor according to one of Claims 1 to 5, in which the means (DEC1) for decoding the concatenation instruction (BMV) are arranged to generate a fixed and predetermined address (ADRd) of the registration of the result (W3) of the concatenation.
